# EUROPÄISCHE PATENTANMELDUNG

(11) **EP 1 925 201 A1**
(43) Veröffentlichungstag der Anmeldung: **28.05.2008**
(21) Anmeldenummer: 06450160.4
(22) Anmeldetag: 09.11.2006
(51) Int. Cl.: A01N 25/12, A01P 1/00

(54) **Verfahren zur antimikrobiellen Behandlung von Pulver**

(71) Anmelder: Zapletal, Werner, 3012 Wolfsgraben (AT)
(72) Erfinder: Zapletal, Werner, 3012 Wolfsgraben (AT); Kurmayer, Markus, 1110 Wien (AT); Stailskij, Sergej, 117049 Moskau (RU)
(74) Vertreter: Babeluk, Michael

(57) **Zusammenfassung**

Die Erfindung betrifft Verfahren zur antimikrobiellen Behandlung von durch mikrobiellen Befall gefährdetem, aus Substratpartikeln bestehendem Pulver. Um den mikrobiellen Befall mit möglichst geringen Biozideinsatz zu vermindern oder zu vermeiden, ist vorgesehen, dass zumindest ein Biozid, zumindest eine Biozidmischung oder zumindest ein ein Biozid enthaltender Trockenprämix dem Pulver beigemischt oder auf die Substratpartikel aufgetragen wird.

## Beschreibung

Die Erfindung betrifft ein Verfahren zur antimikrobiellen Behandlung von durch mikrobiellen Befall gefährdetem, aus Substratpartikeln bestehendem Pulver. Weiters betrifft die Erfindung ein Pulver, bestehend aus Substratpartikel.

Mikrobielle Organismen, insbesondere Bakterien, Hefen und Pilze, kommen in allen Bereichen der Umwelt vor und sind fähig, unter den extremsten Bedingungen zu überleben. Sporenbildende Organismen können viele Jahre in einem Ruhezustand überleben, bereit sich bei geeigneten Umweltbedingungen zu vermehren. Andere treten auf, wenn der Feuchtigkeitsgehalt der Umgebung zur Wachstumsförderung ausreicht. Alle sind fähig, organische Substrate als Nährstoffe zu nutzen.

Es ist bekannt, dass durch Mikroorganismen organische Stoffe, wie Lebensmittel, verderben können. Aber auch andere organische Stoffe, die in der Industrie eingesetzt werden, zum Beispiel Stärke, können durch diesen Befall an Qualität verlieren und hohe Kosten verursachen. Um den Befall mit Mikroorganismen zu minimieren werden Biozide eingesetzt. Biozid-Produkte sind Wirkstoffe und Zubereitungen, die einen oder mehrere Wirkstoffe enthalten, in der Form, in der sie zum Verwender gelangen, und die dazu bestimmt sind, auf chemischem oder biologischem Wege Schadorganismen zu zerstören, abzuschrecken, unschädlich zu machen, Schädigungen durch sie zu verhindern oder sie in anderer Weise zu bekämpfen. Biozide töten Mikroorganismen ab, hemmen deren Wachstum und deren Fortpflanzung. Dadurch wird die Verkeimung reduziert. Schädigungen, wie zum Beispiel der Produktionsmaschinen, Störungen des Produktionsprozesses, Verfärbungen der Produkte, Geruchsbelästigungen, Gesundheitsgefährdungen von Personen, etc., können dadurch minimiert werden.

Speziell in der Papierindustrie, aber auch in anderen Industriezweigen, zum Beispiel der Kosmetik, sind Pulver, wie zum Beispiel Stärke, eine ständige Quelle der Kontamination des Produktionsprozesses mit Mikroorganismen. Dieses führt zu einem hohen Einsatz von Bioziden und unter Umständen zu einer hohen Belastung der Umwelt und des Arbeitsplatzes. Neben der Stärke sind auch andere Pulver, wie Kaolin, Kalziumkarbonat, Pigmente, etc., eine ständige Quelle der Verkeimung in einem Papierherstellungsprozess.

Die JP 03-137298 A offenbart ein Herstellungsverfahren für antibakterielles Papier, wobei ein antibakterielles Pulver dem Papier beigemischt wird. Des weiteren offenbart die JP 11-061698 A ein Verfahren zur Herstellung von Papier, wobei ein antibakterielles Pulver einem Slurry beigemischt wird.

Die JP 11-060423 A beschreibt ein antibakterielles Mittel zur Erzeugung eines antibakteriellen fasrigen Materials, wobei ein aus dem Lackporling extrahiertes Pulver einer Lösung beigesetzt wird und die Lösung auf das fasrige Material aufgetragen und getrocknet wird.

Die WO 97/46626 A beschreibt ein Verfahren zur Verhinderung des Wachstums von Bakterien, bei dem eine Beschichtung aus einem ein Biozid enthaltendem Pulver auf ein durch einen metallischen Artikel gebildeten Substrat aufgetragen wird.

Die bekannten Verfahren haben gemeinsam, dass das Biozid in einem relativ späten Verarbeitungsvorgang des Produktes auf dieses aufgebracht wird. Dies hat den Nachteil, dass große Mengen an Bioziden erforderlich sind, was eine Belastung der Umwelt und des Arbeitsplatzes verursacht. Weiters wirkt sich der hohe Einsatz an Bioziden nachteilig auf die Fertigungskosten des Produktes aus. Zusätzlich ist wegen des späten und hohen Einsatzes von Biozid der Einsatz nicht in allen Industriezweigen möglich. So sind gerade bei Papier das später in Kontakt mit Lebensmitteln kommt die Auflagen bezüglich Restmengen im finalen Produkt sehr hoch.

Aufgabe der Erfindung ist es daher, diese Nachteile zu vermeiden und einen mikrobiellen Befall unter Einsatz von möglichst geringen Biozidmengen zu vermeiden.

Erfindungsgemäß wird dies dadurch erreicht, dass zumindest ein Biozid, zumindest eine Biozidmischung oder zumindest ein ein Biozid enthaltender Trockenprämix dem Pulver beigemischt oder auf die Substratpartikel aufgetragen wird.

Zum Unterschied zu bekannten Verfahren wird das Biozid so früh wie möglich einem durch Pulver gebildeten Ausgangsprodukt beigemischt oder auf die Substratpartikel des Pulvers aufgetragen. Durch die frühe Zugabe von Bioziden wird bereits die Quelle der Verkeimung ausgeschaltet. Mikrobieller Befall kann somit mit äußerst geringem Biozideinsatz und möglichst schonend, sowie mit geringen Kosten und minimaler Belastung für die Umwelt vermieden werden.

Dies ermöglicht es, beispielsweise bei der Papierproduktion, die Dosierung aller Biozide auf der Papiermaschine im Betrieb zu reduzieren und die Schleimbelastung auf der Papiermaschine, die Gesundheitsbelastung der Mitarbeiter und die Endbelastung im Finalprodukt - unter Beibehaltung, bzw. Verbesserung der Behandlungseffizienz - stark zu reduzieren.

Dabei kann beispielsweise ein Biozidpulver als trockenes Pulver auf die Substratpartikel des Pulvers, vorzugsweise elektrostatisch, aufgetragen werden.

Alternativ dazu ist es auch möglich, dass Biozid durch Aufsprühen, Absorption oder Adsorption auf die Substratpartikel aufgetragen wird, wobei vorzugsweise Biozid in gelöster Form auf die Substratpartikel aufgetragen wird. Nach dem Auftragen des Biozids wird das Lösungsmittel durch Verdampfen oder Verdunsten entfernt, so dass das Biozid in Form von kleinsten Partikeln auf den Substratpartikeln haften bleibt.

In einer besonders bevorzugten Ausführungsvariante der Erfindung ist vorgesehen, dass ein Trockenprämix aus mit Biozid behandelten Substratpartikeln hergestellt wird, wobei der Gehalt des Biozids im Trockenprämix höher als im Pulver ist und vorzugsweise bis zum 1600-fachen des Gehaltes des Biozids im Pulver beträgt. Das Trockenprämix kann zur genauen Einstellung der gewünschten Biozidkonzentration dem Pulver beigemischt werden. Dadurch wird ein hoher Feuchtigkeitsgehalt im Pulver verhindert und eine gleichmäßige Verteilung des Biozids im Pulver gewährleistet.

Je nach den chemischen Erfordernissen des Biozids erfolgt eine Bufferung mit geeigneten sauren oder basischen Stoffen, um den nötigen pH-Wert für das enthaltende Biozid sicherzustellen.

Geeignete Biozide sind zum Beispiel Bronopol, Glutaraldehyd, Triclosan, Neomekkins^{®} (Mischung aus 2-Phenoxyethanol und verschiedenen Parabenen), Parabene (Ester der p-Hydroxybenzoesäure) und alle gängigen Biozide zur Abtötung von Mikroorganismen oder zur Wachstumshemmung in jeder möglichen Form.

Dabei können auch mehrere Biozide in Kombination eingesetzt werden, wodurch synergetische Effekte auftreten können, wie zum Beispiel bei Glutaraldehyd und Bronopol oder von 2-methyl-4-isothiazolin-3-on und 5-Chloro-2-methyl-4-isothiazolin-3-on.

## Patentansprüche

1. Verfahren zur antimikrobiellen Behandlung von durch mikrobiellen Befall gefährdetem, aus Substratpartikeln bestehendem Pulver, **dadurch gekennzeichnet, dass** zumindest ein Biozid, zumindest eine Biozidmischung oder zumindest ein ein Biozid enthaltender Trockenprämix dem Pulver beigemischt oder auf die Substratpartikel aufgetragen wird.

2. Verfahren nach Anspruch 1, **dadurch gekennzeichnet, dass** Biozidpulver im trockenen Zustand dem Pulver beigemischt oder auf die Substratpartikel aufgetragen wird.

3. Verfahren nach Anspruch 2, **dadurch gekennzeichnet, dass** Biozidpulver elektrostatisch auf die Substratpartikel aufgetragen wird.

4. Verfahren nach Anspruch 1 oder 2, **dadurch gekennzeichnet, dass** Biozid durch Aufsprühen, Absorption oder Adsorption auf die Substratpartikel aufgetragen wird.

5. Verfahren nach Anspruch 4, **dadurch gekennzeichnet, dass** Biozid in gelöster Form auf die Substratpartikel aufgetragen wird.

6. Verfahren nach Anspruch 4 oder 5 **dadurch gekennzeichnet, dass** das Lösungsmittel, in welchem das Biozid gelöst ist, nach dem Auftragen auf die Substratpartikel durch Verdampfen oder Verdunsten entfernt wird, so dass das Biozid vorzugsweise in Form kleinster Partikel auf den Substratpartikeln haften bleibt.

7. Verfahren nach einem der Ansprüche 1 bis 6, **dadurch gekennzeichnet, dass** ein Trockenprämix aus mit Biozid behandelten Substratpartikeln hergestellt wird, wobei der Gehalt des Biozids im Trockenprämix höher als im Pulver ist und vorzugsweise bis zum 1600-fachen des Gehaltes des Biozids im Pulver beträgt.

8. Verfahren nach Anspruch 7, **dadurch gekennzeichnet, dass** das Trockenprämix dem Pulver beigemischt wird, bis der gewünschte Gehalt an Biozid im Pulver erreicht wird.

9. Verfahren nach einem der Ansprüche 1 bis 7, **dadurch gekennzeichnet, dass** im Pulver eine Bufferung mit einem sauren oder basischen Bufferstoff durchgeführt wird, um den nötigen pH-Wert für das enthaltene Biozid sicherzustellen.

10. Verfahren nach einem der Ansprüche 1 bist 9, **dadurch gekennzeichnet, dass** zumindest zwei verschiedene Biozide miteinander kombiniert werden.

11. Pulver, bestehend aus Substratpartikel, **dadurch gekennzeichnet, dass** dem Pulver zumindest ein Biozid beigemischt oder auf die Substratpartikel aufgetragen ist.
